Europäisches Patentamt

European Patent Office

Office européen des brevets

(19)

(11) **EP 1 538 227 A1**

(12) **EUROPEAN PATENT APPLICATION**

(43) Date of publication:
08.06.2005 Bulletin 2005/23

(51) Int Cl.⁷: **C21D 9/28**, C21D 8/00,
C22C 38/32, F16C 3/02

(21) Application number: 04105679.7

(22) Date of filing: 11.11.2004

(84) Designated Contracting States:
**AT BE BG CH CY CZ DE DK EE ES FI FR GB GR
HU IE IS IT LI LU MC NL PL PT RO SE SI SK TR**
Designated Extension States:
**AL HR LT LV MK YU**

(30) Priority: 03.12.2003 JP 2003404427

(71) Applicant: **Daido Tokushuko Kabushiki Kaisha
Nagoya-shi, Aichi 460-8581 (JP)**

(72) Inventor: **MATSUMURA, Yasushi
457-8545, Aichi (JP)**

(74) Representative: **Laako, Tero Jussi
Berggren Oy Ab
Patent Dept
P.O. Box 16
00100 Helsinki (FI)**

(54) **Mechanical structural shaft component and method of manufacturing the same**

(57)     The invention is to provide a method of manufacturing a mechanical structural shaft component improved in the fatigue strength and maintained in the manufacturability, and a mechanical structural shaft component manufactured by the method. The shaft component is manufactured by blending and melting a raw material so as to achieve a steel material composition of, in % by mass, Fe: 96% or more, C: 0.45% or more and 0.55% or less, Si: 0.02% or more and 0.15% or less, Mn: more than 0.50% and 1.20% or less, P: 0.005% or more and 0.020% or less, S: 0.005% or more and 0.030% or less, Cr: 0.10% or more and 0.30% or less, Al: 0.002% or more and 0.050% or less, Ti: 0.020% or more and 0.050% or less, B: 0.0005% or more and 0.0030% or less and Nb: 0.020% or more and 0.100% or less; by allowing the raw material to solidify, while keeping cooling rate of the center portion of a bloom at 2°C/min or above; and by subjecting the resultant steel material to product rolling or forging at a heating temperature of 950°C to 1,050°C, and at a working temperature of 800°C to 1,050°C, to thereby make the steel material having a geometry of shaft component, and further to induction hardening and tempering.

EP 1 538 227 A1

Printed by Jouve, 75001 PARIS (FR)

# EP 1 538 227 A1

**Description**

BACKGROUND OF THE INVENTION

1. Field of the Invention

This invention relates to a mechanical structural shaft component subjected to induction hardening, more specifically to a mechanical structural shaft component for which high bending strength and torsional strength are required, such as outer-race-type driving shaft for constant-velocity universal joint, and also relates to a method of manufacturing the same.

2. Description of the related art

Mechanical structural shaft components, in particular such as power shaft components including automotive driving shaft typified by outer-race-type driving shaft for constant-velocity universal joint, are used under environments in which large torsional load and bending load are repetitively applied, so that it is necessary for the components to be excellent in static strength and fatigue strength. Heretofore, this sort of shaft components have been shaped into desired shaft geometries by processing a steel material by hot, warm or cold processing (forging, for example), which has been followed by induction hardening so as to form a hardened layer on the surface thereof, to thereby raise the fatigue strength. The steel material generally used herein is typically a medium-carbon steel containing C in an amount of 0.40 to 0.60% by mass.

The steel material has a general tendency of being increased in the strength as the hardness increases. Increase in the surface hardness is indispensable for the purpose of fully raising the fatigue strength against torsion or bending, and of further enhancing the strength of induction-hardened steel. As for a steel material used after being subjected to induction hardening, excessive increase in the hardness makes it more likely to cause grain boundary fracture initiated at crystal boundaries, and makes it more susceptible to notch brittleness, and this results in only a limited range of improvement in the strength against expectation. In relation to this problem, it has already been confirmed that addition of B capable of increasing the grain boundary strength can improve the strength. The method as a single measure can, however, reach only a limited level of improvement in the strength, and cannot support further improvement at present.

There is disclosed a method by which the crystal grains are micronized by adding Nb, and the grain boundary is strengthened by adding Mo (in Japanese Patent Application Laid-Open Publication "Tokkai" No. 2003-253394).

The method is, however, difficult in raising the strength of large-diameter components. Any effort of raising the strength of the large-diameter components needs raising of the hardening property, but increase in the amount of addition of Mn therefor worsens the manufacturability because Mn hardens the components.

A subject of the invention is to provide a method of manufacturing a mechanical structural shaft component further improved in fatigue strength against torsion and bending, capable of ensuring a sufficient level of durability even under heavy load conditions, and also excellent in manufacturability, and is also to provide a mechanical structural shaft component manufactured by the method.

SUMMARY OF THE INVENTION

A method of manufacturing a mechanical structural shaft component conceived in order to solve the aforementioned subject comprises the steps of:

blending and melting a raw material so as to achieve a steel material composition of, in % by mass, Fe: 96% or more, C: 0.45% or more and 0.55% or less, Si: 0.02% or more and 0.15% or less, Mn: more than 0.50% and 1.20% or less, P: 0.005% or more and 0.020% or less, S: 0.005% or more and 0.030% or less, Cr: 0.10% or more and 0.30% or less, Al: 0.002% or more and 0.050% or less, Ti: 0.020% or more and 0.050% or less, B: 0.0005% or more and 0.0030% or less and Nb: 0.020% or more and 0.100% or less;
allowing the raw material to solidify within a temperature range from $1,200°C$ to $1,400°C$, both ends inclusive, while keeping cooling rate of the center portion of a bloom at $2°C$/min or above;
subjecting the resultant steel material to product rolling or forging at a heating temperature of $950°C$ to $1,050°C$, and at a working temperature of $800°C$ to $1,050°C$, to thereby make the steel material into a processed matter having a geometry of shaft component;
subjecting the processed matter to induction hardening; and
subjecting the induction-hardened processed matter to tempering.

A mechanical structural shaft component of the invention is manufactured by blending and melting a raw material so as to achieve a steel material composition of, in % by mass, Fe: 96% or more, C: 0.45% or more and 0.55% or less, Si: 0.02% or more and 0.15% or less, Mn: more than 0.50% and 1.20% or less, P: 0.005% or more and 0.020% or less, S: 0.005% or more and 0.030% or less, Cr: 0.10% or more and 0.30% or less, Al: 0.002% or more and 0.050% or less, Ti: 0.020% or more and 0.050% or less, B: 0.0005% or more and 0.0030% or less and Nb: 0.020% or more and 0.100% or less;

by allowing the raw material to solidify within a temperature range from 1,200°C to 1,400°C, both ends inclusive, while keeping cooling rate of the center portion of a bloom at 2°C/min or above; and

by subjecting the resultant steel material to product rolling or forging at a heating temperature of 950°C to 1,050°C, and at a working temperature of 800°C to 1,050°C, to thereby make the steel material into a processed matter having a geometry of shaft component, and further to induction hardening and tempering,

wherein torsional strength y (MPa) and average hardness x (Hv) defined by the equation below:

$$x = \frac{3}{a^3} \, a \int_0^a h(r) r^2 \, dr$$

where "a" is radius of the shaft, r is distance from the center, and h(r) is hardness at distance r from the center, satisfy a relation of y>2.5x.

By the above-described method using thus-blended raw material, the shaft component is successfully enhanced in the hardening effect ascribable to increase in Mn, and also enhanced in the micronization effect ascribable to increase in Nb, and is successful in raising the grain boundary strength of the hardened layer. Any conventional effort of raising the average hardness often resulted in saturation of effect of enhancing the torsional strength, whereas the mechanical structural shaft component of the invention obtained as described in the above is successfully enhanced in the torsional strength, while being also raised in the average hardness.

More specifically, in the method of manufacturing a mechanical structural shaft component of the invention, the induction hardening is carried out so as to adjust hardened layer ratio expressed by t/R to 0.4 to 0.8, both ends inclusive, where "t" is thickness defined by a distance from the surface of the mechanical structural shaft component to a position in the radial direction thereof where a hardness equivalent to that of 50% martensite formation is achieved, and "R" is radius of the shaft component, and the tempering is carried out at 150°C to 220°C, both ends inclusive, for 2 to 150 minutes, both ends inclusive.

This makes it possible to raise the toughness of the hardened layer, and to improve the fatigue durability. Both of too low tempering temperature and too short hold time in the tempering undesirably reduce the effect of enhancing the toughness. Both of too high tempering temperature and too long hold time in the tempering undesirably result in only a too small hardness of the hardened layer, and therefore fail in ensuring a satisfactory level of strength.

It is also allowable to use, as the steel material, a material containing, in % by mass, Mo: 0.05% or more and 0.50% or less, if necessary. Addition of Mo is successful in stressing the crystal.

It is still also allowable to use, as the steel material, a material containing at least any one of, in % by mass, Pb: 0.01% or more and 0.20% or less, Bi: 0.01% or more and 0.10% or less, and Ca: 0.0005% or more and 0.0050% or less. Inclusion of these elements is successful in improving the free-cuttability.

The following paragraphs will describe reasons for limitation on the composition of the steel material in the invention.

1) C: 0.45% by mass or more to 0.55% by mass or less

C is an element capable of determining the strength depending on the amount of addition. In the invention, the element is contained in an amount of 0.45% by mass or more in order to obtain a surface hardness necessary for keeping the strength of the component. The content exceeding 0.55% by mass, however, degrades the machinability and causes cracks during the induction hardening, so that the upper limit is controlled to 0.55% by mass.

2) Si: 0.02% by mass or more to 0.15% by mass or less

Si acts as a deoxidizer, and also effectively acts as a crystal stressing element and as a tempering resistance improving element. The content must therefore be 0.02% by mass or more. An excessive content, however, makes the steel material more likely to produce bainite texture during cooling, and then results in degraded machinability and degraded cold workability. The content is therefore controlled to 0.15% by mass or less.

3) Mn: more than 0.50% by mass and 1.20% by mass or less

Mn acts as a desulfurizer and is necessary for ensuring hardening property. The element also has an action of raising the strength and toughness, so that it is contained in an amount more than 0.50% by mass in order to secure the strength. An excessive content, however, makes the steel material more likely to produce bainite texture during cooling, and then results in degraded machinability and degraded cold workability. The content is therefore controlled to 1.20% by mass or less.

4) P: 0.005% by mass or more and 0.020% by mass or less

P is an element possibly reducing the grain boundary strength, so that the content thereof is controlled to 0.020% by mass or less in order to improve the grain boundary strength. The effect of improving the grain boundary strength will, however, saturate, and an excessive reduction in the content will result only in increase in the cost. The content is therefore set to 0.0050% by mass or more.

5) S: 0.005% by mass or more and 0.030% by mass or less

S is an element possibly reducing the grain boundary strength, so that the content thereof is controlled to 0.030% by mass or less in order to improve the grain boundary strength. The element, however, has an effect of improving the machinability, and an excessive reduction in the content will result in saturation of the effect of improving the grain boundary strength. The content is therefore set to 0.005% by mass or more.

6) Cr: 0.10% by mass or more and 0.30% by mass or less

Cr is necessary for securing toughness of martensite. The element also acts as a tempering resistance improving element, and is contained in an amount of 0.10% by mass or more. An excessive content, however, makes the steel material more likely to produce bainite texture during cooling, and then results in degraded machinability. The content is therefore controlled to 0.30% by mass or less.

7) Al: 0.002% by mass or more and 0.050% by mass or less

Al acts as a deoxidizer, binds with N to produce AlN, suppresses coarsening of austenitic grains, and contributes to micronization of the texture. An excessive content, however, results in saturation of the effect, and increase in $Al_2O_3$ results in lowered toughness. The content is therefore controlled to 0.050% by mass or less.

8) Ti: 0.020% by mass or more and 0.050% by mass or less

Ti reacts with N to produce TiN, and can further raise the durability through an effect of micronizing the crystal grains using TiN as nuclei. The element is necessary also for ensuring hardening property of B. The content is therefore set to 0.020% by mass or more. A large amount of addition thereof, however, impairs the cleanliness of the steel, saturates the effect, and lowers the toughness. The upper limit of the content is therefore controlled to 0.050% by mass.

9) B: 0.0005% by mass or more and 0.0030% by mass or less

B has an effect of ensuring hardening property and as a crystal stressing element, contained in an amount of 0.0005% by mass or more. A large amount of addition thereof, however, results in saturation of the effect, and degrades hot workability, so that the content thereof is controlled to 0.0030% by mass or less.

10) Nb: 0.020% by mass or more and 0.100% by mass or less

Nb micronizes the crystal grains. An excessive content thereof, however, results in saturation of the effect, and small solid solubility thereof may result in lowered toughness. The upper limit of the content is therefore controlled to 0.100% by mass.

11) Mo: 0.05% by mass or more and 0.50% by mass or less

Mo has effects of ensuring toughness of martensite and of crystal stressing. The element also acts as a tempering resistance improving element. An excessive content, however, degrades the machinability of the steel material.

12) Pb: 0.01% by mass or more and 0.20% by mass or less

Pb is an element capable of improving the machinability, wherein an excessive content thereof results in saturation of the effect. The upper limit of the content is therefore controlled to 0.20% by mass.

13) Bi: 0.01% by mass or more and 0.10% by mass or less

Bi is an element capable of improving the machinability, wherein an excessive content degrades the toughness, and also results in saturation of the effect. The upper limit of the content is therefore controlled to 0.10% by mass.

14) Ca: 0.0005% by mass or more and 0.0050% by mass or less

Ca is an element capable of improving the machinability, wherein an excessive content results in saturation of the effect. The upper limit of the content is therefore controlled to 0.0050% by mass.

BRIEF DESCRIPTION OF THE DRAWINGS

FIG. 1 is a front elevation of a spline shaft using a steel material for the mechanical structural shaft component of the invention;
FIG. 2 is an enlarged sectional view taken along line II-II in FIG. 1;
FIG. 3 is a sectional view showing an example of a driving shaft mechanism of a constant-velocity universal joint type, using the spline shaft shown in FIG. 1; and
FIG. 4 is a graph showing relations between average hardness and torsional strength.

DESCRIPTION OF THE PREFERRED EMBODIMENT

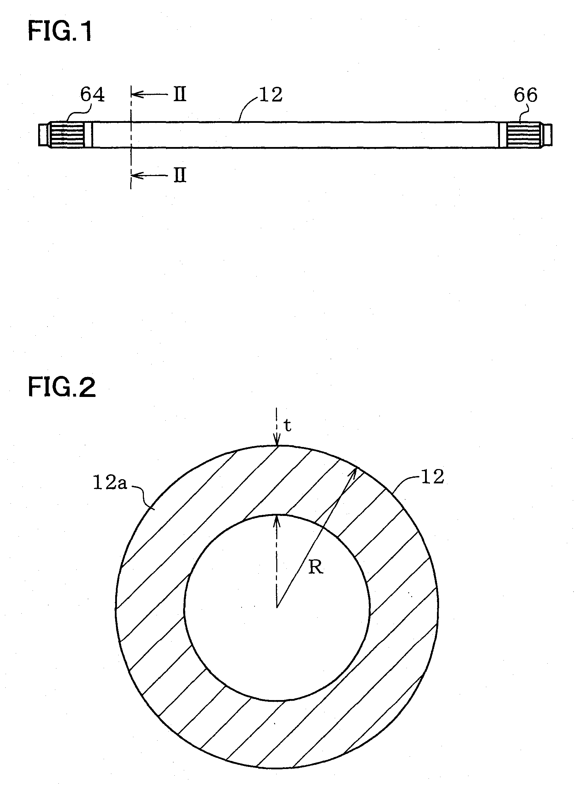

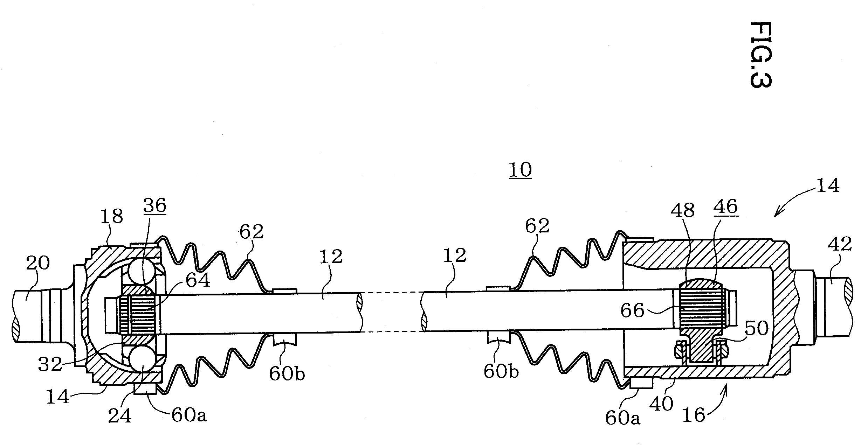

FIG. 1 shows an example of a spline shaft used for an automotive driving shaft mechanism, configured using the steel material for mechanical structural shaft component of the invention. FIG. 2 is a sectional view taken along line II-II in FIG. 1. The spline shaft 12 has male spline portions 64, 66 formed on both ends thereof. The shaft including the male shaft portions 64, 66 has an induction-hardened layer 12a formed over the entire surface thereof.

A method of manufacturing the steel material for the mechanical structural shaft component will be described below. First, a raw material is melted and cast. The raw material during the casting is allowed to cool at a cooling rate of the center portion of a bloom at 2°C/min or above, and is then shaped into a shaft geometry by product rolling or forging. The product rolling or forging is carried out at a heating temperature of the bloomed material of 950°C to 1,050°C, and at a working temperature of 800°C to 1,050°C. The cooling rate adjusted to at 2°C/min makes it possible to keep Nb in a solid-solubilized state, and the product rolling or forging carried out under heating at 950°C to 1,050°C makes it possible to allow the solid-solubilized Nb to partially deposit, and this is successful in obtaining an effect of Nb as a crystal micronization element.

Next, the male spline portions 64, 66 are subjected to groove formation by rolling or cutting. The induction-hardened layer 12a can be formed by the procedures described below. The obtained shaft member is inserted into a heating coil, and the surficial portion thereof is induction-heated at a frequency of 10 kHz so as to adjust the temperature to 900 to 1,100°C, kept for 10 to 40 seconds, and is then water-cooled, so as to accomplish induction hardening. The shaft member is then kept in an atmospheric furnace at 180°C for 60 minutes, and is then water-cooled, so as to accomplish tempering, to thereby form the final hardened layer 12a.

Thickness t of the hardened layer is defined by a distance from the surface of the shaft component to a position in the radial direction thereof where a hardness equivalent to that of 50% martensite formation is achieved. Assuming now ratio t/R of the thickness t and the shaft diameter R as hardened layer ratio, t/R was adjusted to 0.4 to 0.8, and preferably to 0.5. Any value of t/R largely deviated from this range may undesirably result in lowering in the torsional fatigue strength.

FIG. 3 shows an example of a driving shaft mechanism of constant-velocity universal joint type, using the spline shaft 12. The driving shaft mechanism 10 comprises the spline shaft 12, a first constant-velocity universal joint 14 of Barfield type for transmitting rotary driving force to an unillustrated wheel, provided on one end portion of the spline shaft 12, and a second constant-velocity universal joint 16 of triport type connected to an unillustrated differential gear side, provided on the other end portion along the axial direction of the splline shaft 12.

The first constant-velocity universal joint 14 provided on the wheel side (out-board side) has an outer cup composed of a cup portion 18 and a shaft portion 20 formed in an integrated manner, and inside the cup, balls 24 composing the universal joint are allowed to roll on an inner member 32. In the center portion of the inner member 32, a female spline portion 36 is formed so as to penetrate therethrough, to which the male spline portion 64 of the spline shaft 12 engages. On the other hand, the second constant-velocity universal joint 16 provided on the differential gear side (in-board side) has an outer cup composed of a bottomed cylinder portion 40 and a shaft portion 42 formed in an integrated manner, a ring-formed spider boss portion 48 is provided in the inner space of the outer cup, a female spline portion 46 is formed so as to penetrate therethrough, and the male spline portion 66 of the spline shaft 12 is engaged with the female spline portion 46. The spider boss portion 48 has three nearly-cylindrical trunnions 50 located therearound at regular angular intervals so as to be swollen out in the radial direction.

By being configured using the steel material for the mechanical structural shaft component of the invention, the spline shaft 12 is successfully improved in the fatigue strength against torsion and bending, and can secure a sufficient durability under heavy load conditions. The mechanical structural shaft component of the invention is raised in the hardening property by virtue of Mn, and can successfully achieve a sufficient level of torsional strength even if the radius thereof is as large as 25 mm or more.

(Example)

Experiments below were carried out in order to confirm the effects of the invention. The raw material was blended so as to obtain any of the compositions listed in Table 1, melted in an electric furnace to thereby obtain a steel ingot of 70 tons in weight, and is then subjected to continuous casting so as to obtain a 370 mm×510 mm steel ingot. The steel ingot was then rolled into a shaft of 50 mm in diameter. The steel ingot during the casting was allowed to solidify within a temperature range from 1,200°C to 1,400°C, both ends inclusive, while keeping cooling rate of the center portion of the bloom at 2°C/min or above. The rolling was carried out at a heating temperature of the bloom of 950°C to 1,050°C, both ends inclusive, and at a working temperature of 800°C to 1,050°C, both ends inclusive. It is to be noted that only comparative example 7 cast a steel ingot of 7.1 tons in weight. The individual compositions in the inventive examples 1 to 8 and comparative examples 1 to 10 are listed in Table 1.

[Table 1]

| Class | No. | Chemical components (in % by mass, only B is expressed in ppm) | | | | | | | | | | | | | Cooling rate during forging (°C/min) | Heating temperature (°C) | Working temperature (°C) |
|---|---|---|---|---|---|---|---|---|---|---|---|---|---|---|---|---|---|
| | | C | Si | Mn | P | S | Cr | Mo | Al | Ti | Nb | N | B | Others | | | |
| Inventive example | 1 | 0.49 | 0.12 | 0.61 | 0.015 | 0.009 | 0.15 | - | 0.021 | 0.045 | 0.031 | 0.008 | 15 | - | 5.1 | 1001 | 905 |
| | 2 | 0.51 | 0.10 | 0.71 | 0.013 | 0.012 | 0.11 | 0.12 | 0.028 | 0.037 | 0.052 | 0.009 | 14 | - | 5.5 | 982 | 902 |
| | 3 | 0.47 | 0.14 | 0.95 | 0.012 | 0.021 | 0.12 | 0.21 | 0.025 | 0.035 | 0.025 | 0.007 | 14 | - | 5.2 | 995 | 891 |
| | 4 | 0.48 | 0.12 | 0.52 | 0.014 | 0.015 | 0.16 | - | 0.029 | 0.038 | 0.089 | 0.009 | 16 | 0.0015 Ca added | 6.1 | 999 | 921 |
| | 5 | 0.53 | 0.10 | 0.65 | 0.013 | 0.011 | 0.14 | 0.12 | 0.021 | 0.034 | 0.052 | 0.008 | 14 | 0.08 Pb added | 4.8 | 1005 | 915 |
| | 6 | 0.54 | 0.09 | 0.55 | 0.015 | 0.021 | 0.17 | - | 0.025 | 0.004 | 0.075 | 0.009 | 16 | - | 4.2 | 1003 | 895 |
| | 7 | 0.47 | 0.07 | 0.73 | 0.013 | 0.012 | 0.16 | 0.25 | 0.025 | 0.037 | 0.025 | 0.007 | 15 | - | 5.5 | 993 | 900 |
| | 8 | 0.50 | 0.09 | 0.65 | 0.014 | 0.015 | 0.17 | 0.15 | 0.026 | 0.036 | 0.031 | 0.008 | 15 | - | 5.2 | 980 | 925 |
| Comparative example | 1 | 0.39 | 0.12 | 0.51 | 0.011 | 0.015 | 0.16 | 0.21 | 0.025 | 0.035 | 0.035 | 0.009 | 18 | - | 5.2 | 995 | 895 |
| | 2 | 0.58 | 0.11 | 0.45 | 0.017 | 0.021 | 0.14 | 0.11 | 0.027 | 0.039 | 0.031 | 0.008 | 15 | - | 5.1 | 1002 | 911 |
| | 3 | 0.48 | 0.12 | 0.35 | 0.012 | 0.021 | 0.16 | 0.00 | 0.028 | 0.036 | 0.034 | 0.009 | 14 | - | 5.4 | 1010 | 899 |
| | 4 | 0.45 | 0.11 | 1.35 | 0.015 | 0.022 | 0.15 | 0.15 | 0.021 | 0.037 | 0.041 | 0.007 | 17 | - | 5.5 | 981 | 902 |
| | 5 | 0.49 | 0.08 | 0.65 | 0.015 | 0.011 | 0.16 | 0.15 | 0.025 | 0.035 | - | 0.007 | 18 | - | 4.9 | 996 | 900 |
| | 6 | 0.51 | 0.10 | 0.71 | 0.016 | 0.016 | 0.14 | 0.12 | 0.031 | 0.039 | 0.220 | 0.008 | 15 | - | 5.1 | 1005 | 909 |
| | 7 | 0.50 | 0.11 | 0.75 | 0.015 | 0.014 | 0.16 | 0.21 | 0.031 | 0.038 | 0.041 | 0.009 | 15 | - | 0.8 | 1002 | 921 |
| | 8 | 0.51 | 0.09 | 0.64 | 0.013 | 0.014 | 0.14 | 0.15 | 0.021 | 0.035 | 0.052 | 0.008 | 17 | - | 5.1 | 1152 | 1002 |
| | 9 | 0.48 | 0.26 | 0.77 | 0.021 | 0.019 | 0.15 | - | 0.025 | - | - | 0.013 | - | - | 5.1 | 1005 | 911 |
| | 10 | 0.53 | 0.27 | 0.79 | 0.019 | 0.021 | 0.17 | - | 0.026 | - | - | 0.011 | - | - | 5.0 | 1001 | 911 |

Rockwell B-scale hardness HRB of the outer peripheral surfaces of the shafts for testing was measured conforming to a method specified by JIS Z2245. The shafts were also subjected to the individual tests below.

Measurement of tool life was carried out based on cutting test using a test piece of 50 mm in diameter and 300 mm in length fabricated therefor. Using a P10 carbide tool as a cutting tool, the cutting was maintained under conditions of a cutting speed of 300 m/min, a cutting depth per revolution of 2.0 mm, a feed per revolution of 0.2 mm, in a dry process. The tool life was determined by a point in time when the amount of wear of the flank reached 0.2 mm. The tool life was expressed by tool life ratio relative to a result of comparative example 10.

In the torsional strength test, first a test piece of 20 mm in diameter and 200 mm in length was fabricated, and the spline portions, having a diameter of pitch circle of 20 mm and a modulus of 1.0, were formed on both end portions thereof by cold rolling. The test piece was then inserted into a coil, and mobile quenching was carried out by heating the test piece by induction heating (at approximately 1,000°C) at a frequency of 10 kHz while moving the coil in the axial direction, so as to adjust the hardened layer ratio within a range from 0.4 to 0.6. The test piece was then allowed to cool in the air, and was tempered at 180°C for 60 minutes AC.

Next, the test piece was held at the spline portions by a chuck of a torsional strength tester, applied with torsional dislocation at a rate of torsional shearing strain of 0.083°/sec, and static torsional strength was measured based on the load under which fracture occurred. On the other hand, the same type of test piece was set on a torsional fatigue tester, and torsional fatigue strength was determined based on a repetitive stress value under which the number of repetitive load before fracture reaches $2 \times 10^5$ times.

The test piece after tempering was also subjected to measurement of surface hardness, in which micro-Vickers hardness VH1 under a 2.94-N load was measured conforming to a method specified by JIS Z2244 (1998). A test piece not subjected to the torsion test was separately obtained, the shaft was cut at a non-spline position, subjected to measurement of micro-Vickers hardness distribution over the radial direction, wherein Vickers hardness HV2 at the center portion of the shaft was also measured. It is to be noted that the amounts of martensite formation were preliminarily confirmed as being approximately 100% in the surficial portion of the shaft, and 0% in the center portion, based on measurement of area ratio made on an image observed under an optical microscope. Assuming now that the hardness is proportional to the amount of martensite formation, hardness HVm corresponding to 50% martensite formation was calculated by proportional interpolation using values of HV1 and HV2, thickness t of the hardened layer was then determined based on a position indicating the hardness HVm in the micro-Vickers hardness distribution over the radial direction measured in the above, and thereby t/R was calculated. The number of grain size of austenitic crystal grain was also measured by a method described in JIS G0551, based on a photograph of the surficial layer in the section taken under an optical microscope. A smaller grain size of the austenitic crystal in the surficial layer is more successful in reducing an initial crack size of the grain boundary causative of crack initiation, and in raising the strength. Test results are shown in Table 2.

[Table 2]

| Class | No. | Hardness (HRB) | Surface hardness (HV) | Hardened layer ratio | Number of grain size of austenitic crystal | Tool life ratio | Static torsional strength (MPa) | Torsional fatigue strength (MPa) |
|---|---|---|---|---|---|---|---|---|
| Inventive example | 1 | 88.2 | 702 | 0.49 | 10.2 | 1.3 | 1755 | 671 |
| | 2 | 94.1 | 710 | 0.51 | 9.9 | 1.0 | 1815 | 691 |
| | 3 | 95.2 | 683 | 0.52 | 9.8 | 1.0 | 1720 | 659 |
| | 4 | 88.2 | 699 | 0.55 | 10.1 | 3.2 | 1711 | 651 |
| | 5 | 93.8 | 721 | 0.50 | 9.9 | 2.7 | 1891 | 705 |
| | 6 | 90.8 | 725 | 0.49 | 10.4 | 1.2 | 1839 | 700 |
| | 7 | 95.1 | 691 | 0.50 | 9.9 | 1.0 | 1755 | 662 |
| | 8 | 93.4 | 715 | 0.51 | 9.8 | 1.1 | 1780 | 665 |
| Comparative example | 1 | 86.8 | 625 | 0.51 | 9.8 | 1.2 | 1551 | 571 |
| | 2 | 94.9 | 751 | 0.50 | 9.9 | 0.9 | 1619 | 556 |
| | 3 | 84.2 | 699 | 0.32 | 9.7 | 1.2 | 1621 | 571 |
| | 4 | 100.8 | 678 | 0.55 | 10.2 | 0.6 | 1657 | 605 |
| | 5 | 92.1 | 702 | 0.51 | 7.1 | 1.0 | 1516 | 500 |
| | 6 | 98.2 | 715 | 0.55 | 9.9 | 0.6 | 1620 | 611 |
| | 7 | 96.2 | 712 | 0.52 | 7.2 | 0.7 | 1518 | 593 |
| | 8 | 98.1 | 710 | 0.51 | 7.5 | 0.8 | 1611 | 562 |
| | 9 | 92.1 | 694 | 0.50 | 8.1 | 1.5 | 1651 | 602 |
| | 10 | 95.2 | 725 | 0.52 | 7.9 | 1.0 | 1591 | 589 |

It is obvious that the comparative examples showed only poor strength or degraded manufacturability, whereas the inventive examples are successful in ensuring desirable manufacturability while being raised in the strength.

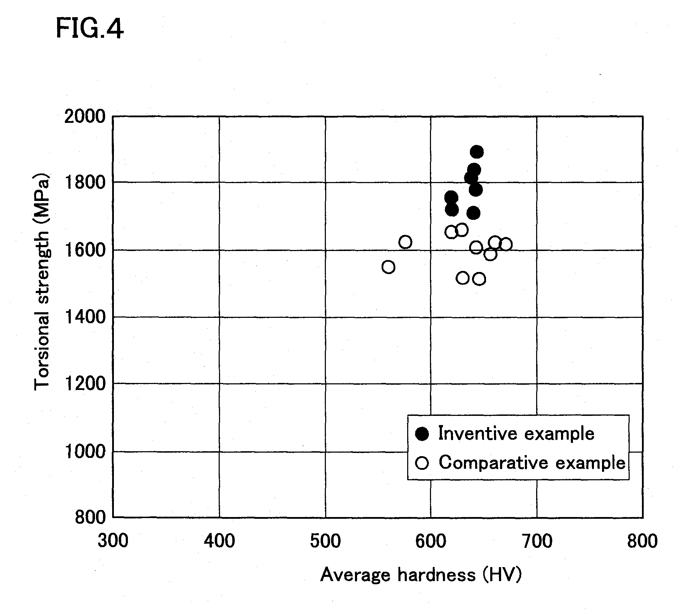

In order to further confirm the effects of the invention, torsional strength relative to the average hardness is shown in FIG. 4. Average hardness x (Hv) herein is defined by the equation below:

$$X = \frac{3}{a^3} a\int_0^a h(r)r^2 \, dr$$

where "a" is radius of the shaft, r is distance from the center, and h(r) is hardness at distance r from the center. In the comparative examples, increase in the average hardness does not always improve the torsional strength. Whereas it is found that the inventive examples show improvement in the torsional strength. In particular, the average hardness x (Hv) and the torsional strength y (MPa) satisfy a relation of y>2.5x.

It is obvious from the results that the steel material which satisfies the compositional ranges specified by the invention and manufactured by the fabrication processes of the invention is excellent in both of static torsional strength and torsional fatigue strength, and is also excellent in the machinability. The conventional effort of raising the average hardness has not always resulted in increase in the torsional strength, whereas the inventive examples are successful in improving the torsional strength relative to the average hardness.

**Claims**

1. A method of manufacturing a mechanical structural shaft component comprising the steps of:

   blending and melting a raw material so as to achieve a steel material composition of, in % by mass, Fe: 96% or more, C: 0.45% or more and 0.55% or less, Si: 0.02% or more and 0.15% or less, Mn: more than 0.50% and 1.20% or less, P: 0.005% or more and 0.020% or less, S: 0.005% or more and 0.030% or less, Cr: 0.10% or more and 0.30% or less, Al: 0.002% or more and 0.050% or less, Ti: 0.020% or more and 0.050% or less, B: 0.0005% or more and 0.0030% or less and Nb: 0.020% or more and 0.100% or less;
   allowing the raw material to solidify within a temperature range from 1,200°C to 1,400°C, both ends inclusive, while keeping cooling rate of the center portion of a bloom at 2°C/min or above;
   subjecting the resultant steel material to product rolling or forging at a heating temperature of 950°C to 1,050°C, both ends inclusive, and at a working temperature of 800°C to 1,050°C, both ends inclusive, to thereby make the steel material into a processed matter having a geometry of shaft component;
   subjecting the processed matter to induction hardening; and
   subjecting the induction-hardened processed matter to tempering.

2. The method of manufacturing a mechanical structural shaft component as claimed in Claim 1, wherein the induction hardening is carried out so as to adjust hardened layer ratio expressed by t/R to 0.4 to 0.8, both ends inclusive, where "t" is thickness defined by a distance from the surface of the mechanical structural shaft component to a position in the radial direction thereof where a hardness equivalent to that of 50% martensite formation is achieved, and "R" is radius of the shaft component, and the tempering is carried out at 150°C to 220°C, both ends inclusive, for 2 to 150 minutes, both ends inclusive.

3. The method of manufacturing a mechanical structural shaft component as claimed in Claim 1 or 2, using a material containing, in % by mass, Mo: 0.05% or more and 0.50% or less as the steel material.

4. The method of manufacturing a mechanical structural shaft component as claimed in any one of Claims 1 to 3, using a material containing at least any one of, in % by mass, Pb: 0.01% or more and 0.20% or less, Bi: 0.01% or more and 0.10% or less, and Ca: 0.0005% or more and 0.0050% or less as the steel material.

5. A mechanical structural shaft component manufactured by blending and melting a raw material so as to achieve a steel material composition of, in % by mass, Fe: 96% or more, C: 0.45% or more and 0.55% or less, Si: 0.02% or more and 0.15% or less, Mn: more than 0.50% and 1.20% or less, P: 0.005% or more and 0.020% or less, S: 0.005% or more and 0.030% or less, Cr: 0.10% or more and 0.30% or less, Al: 0.002% or more and 0.050% or less, Ti: 0.020% or more and 0.050% or less, B: 0.0005% or more and 0.0030% or less and Nb: 0.020% or more and 0.100% or less;
   by allowing the raw material to solidify within a temperature range from 1,200°C to 1,400°C, both ends inclusive, while keeping cooling rate of the center portion of a bloom at 2°C/min or above; and by subjecting the resultant steel material to product rolling or forging at a heating temperature of 950°C to 1,050°C, and at a working temperature of 800°C to 1,050°C, to thereby make the steel material having a geometry of shaft component, and further to induction hardening and tempering,
   wherein torsional strength y (MPa) and average hardness x (Hv) defined by the equation below:

$$X = \frac{3}{a^3} a\int_0^a h(r)r^2 \, dr$$

where "a" is radius of the shaft, r is distance from the center, and h(r) is hardness at distance r from the center, satisfy a relation of y>2.5x.

6. The mechanical structural shaft component as claimed in Claim 5, using a material containing, in % by mass, Mo: 0.05% or more and 0.50% or less as the steel material.

7. The mechanical structural shaft component as claimed in Claim 5 or 6, using a material containing at least any one of, in % by mass, Pb: 0.01% or more and 0.20% or less, Bi: 0.01% or more and 0.10% or less, and Ca: 0.0005% or more and 0.0050% or less as the steel material.

## FIG.1

64   ←—— II       12              66

←—— II

## FIG.2

t

12a                12

R

FIG.3

# FIG.4

**European Patent Office**

## EUROPEAN SEARCH REPORT

Application Number

EP 04 10 5679

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 2000, no. 24, 11 May 2001 (2001-05-11) & JP 2001 192731 A (SUMITOMO METAL IND LTD), 17 July 2001 (2001-07-17) * abstract * ----- | 1,5 | C21D9/28 C21D8/00 C22C38/32 F16C3/02 |
| A | US 6 383 311 B1 (OCHI TATSURO ET AL) 7 May 2002 (2002-05-07) ----- | | |
| A | EP 1 262 671 A (NTN CORPORATION) 4 December 2002 (2002-12-04) ----- | | |
| A | EP 0 643 148 A (NIPPON STEEL CORPORATION; NIPPON STEEL CORP) 15 March 1995 (1995-03-15) ----- | | |
| A | EP 0 487 250 A (DAIDO TOKUSHUKO KABUSHIKI KAISHA; NTN CORPORATION) 27 May 1992 (1992-05-27) ----- | | TECHNICAL FIELDS SEARCHED (Int.Cl.7) C21D C22C F16C |

The present search report has been drawn up for all claims

| Place of search | Date of completion of the search | Examiner |
|---|---|---|
| The Hague | 5 April 2005 | Mollet, G |

EPO FORM 1503 03.82 (P04C01)

**ANNEX TO THE EUROPEAN SEARCH REPORT
ON EUROPEAN PATENT APPLICATION NO.**                    EP 04 10 5679

This annex lists the patent family members relating to the patent documents cited in the above-mentioned European search report.
The members are as contained in the European Patent Office EDP file on
The European Patent Office is in no way liable for these particulars which are merely given for the purpose of information.

05-04-2005

| Patent document cited in search report | | Publication date | Patent family member(s) | | Publication date |
|---|---|---|---|---|---|
| JP 2001192731 | A | 17-07-2001 | NONE | | |
| US 6383311 | B1 | 07-05-2002 | JP | 2000154819 A | 06-06-2000 |
| | | | DE | 19955386 A1 | 28-09-2000 |
| | | | GB | 2345490 A ,B | 12-07-2000 |
| EP 1262671 | A | 04-12-2002 | JP | 2002356742 A | 13-12-2002 |
| | | | JP | 2002349538 A | 04-12-2002 |
| | | | EP | 1262671 A1 | 04-12-2002 |
| | | | US | 2002182438 A1 | 05-12-2002 |
| EP 0643148 | A | 15-03-1995 | DE | 69430835 D1 | 25-07-2002 |
| | | | DE | 69430835 T2 | 13-02-2003 |
| | | | EP | 0643148 A1 | 15-03-1995 |
| | | | WO | 9420645 A1 | 15-09-1994 |
| | | | US | 5545267 A | 13-08-1996 |
| EP 0487250 | A | 27-05-1992 | JP | 2725747 B2 | 11-03-1998 |
| | | | JP | 5179400 A | 20-07-1993 |
| | | | DE | 69117262 D1 | 28-03-1996 |
| | | | DE | 69117262 T2 | 05-09-1996 |
| | | | EP | 0487250 A1 | 27-05-1992 |
| | | | US | 5223049 A | 29-06-1993 |

EPO FORM P0459

For more details about this annex : see Official Journal of the European Patent Office, No. 12/82